# EUROPÄISCHE PATENTSCHRIFT

(11) **EP 1 764 604 B1**
(45) Veröffentlichungstag und Bekanntmachung des Hinweises auf die Patenterteilung: **18.02.2009**
(21) Anmeldenummer: 06120014.3
(22) Anmeldetag: 01.09.2006
(51) Int. Cl.: G01N 1/14, G01N 1/18

(54) **Gekühlter Probenehmer**
Cooled sampling station
Système refroidifié pour prélèvement d'échantillons

(30) Priorität: 15.09.2005 DE 102005044242
(43) Veröffentlichungstag der Anmeldung: 21.03.2007
(73) Patentinhaber: ENDRESS + HAUSER WETZER GmbH + Co. KG, D-87484 Nesselwang (DE)
(72) Erfinder: Dangelmaier, Peter, 87487, Wiggensbach (DE)
(74) Vertreter: Andres, Angelika Maria

(56) Entgegenhaltungen:
- EP-A2- 1 028 320
- GB-A- 1 511 737
- JP-A- 10 048 221
- US-A- 2 348 806
- US-A- 3 897 687
- US-A- 5 587 926
- US-A1- 2005 016 299
- US-A1- 2005 084 956

## Beschreibung

Die Erfindung betrifft einen gekühlten Probennehmer.

Gekühlte Probennehmer sind bereits aus dem Stand der Technik bekannt. Von der Anmelderin wird unter der Bezeichnung ASP-Port 2000 bzw. ASP-Station 2000 ein transportabler bzw. ein stationärer Probenehmer zur Entnahme von definierten Probenmengen eines fluiden Mediums aus einer Probe-Entnahmestelle angeboten und vertrieben. Gekühlte Probennehmer sind auch aus den Dokumenten US 3 897 687 und US 5 587 926 bekannt.

Bei den bekannten Probenehmern werden bevorzugt Vakuum-Membran-pumpen eingesetzt; die Dosierung der definierten Probenmenge in die Proben-Aufnahmebehälter erfolgt mittels Pneumatik-Komponenten, die von einem Mikroprozessor gesteuert werden. Die Ablaufsteuerung bei einer Probenahme nach dem Vakuumprinzip arbeitet folgendermaßen: In einem ersten Schritt wird die Dosiereinheit pneumatisch abgesperrt, indem ein Quetschventil geschlossen und eine flexible Rohrleitung, beispielsweise ein Ablaufschlauch, abgesperrt wird. Die Membranpumpe bläst über den Dosierbehälter die Ansaugleitung frei. Anschließend wird eine frische Probe angesaugt, bis ein definierter Füllstand in dem Dosierbehälter erreicht ist. In einem dritten Schritt wird ein eingestelltes, definiertes Probevolumen dosiert; die überschüssige Probemenge fließt zur Probe-Entnahmestelle zurück. Zuletzt wird das Quetschventil wieder geöffnet, und die dosierte Probemenge wird in den Aufnahmebehälter abgelassen.

Bei einer bekannt gewordenen alternativen Ausgestaltung eines Probennehmers erfolgt das Ansaugen und Dosieren der definierten Probenmenge über eine Schlauch- bzw. eine Peristaltikpumpe. Hierbei wird ein flexibler Pumpenschlauch durch eingreifende Rollen periodisch verformt, wodurch eine Pumpwirkung erzeugt wird. Zur Detektion der in der Rohrleitung geförderten Probenmenge wird bevorzugt ein Drucksensor eingesetzt. Die Förderung der definierten Probenmenge kann mengen-oder durchflussgesteuert erfolgen.

Der Erfindung liegt die Aufgabe zugrunde, die Kühlung eines Probennehmers zu verbessern. Insbesondere soll der Probennehmer dahingehend verbessert werden, dass die Abkühlung einer gezogenen Probe auf die gewünschte Kühltemperatur des Probennehmers innerhalb kurzer Zeit erfolgt.

Die Aufgabe wird durch die folgenden Merkmale gelöst. Der Probennehmer dient zur Entnahme und Aufbewahrung von definierten Probenmengen eines fluiden Mediums. Er weist einen Probenraum - in dem mehrere Aufnahmebehälter, zumindest jedoch ein Aufnahmebehälter - zur Aufnahme der definierten Probenmengen angeordnet sind, und eine Kühleinheit auf. Zwischen dem Probenraum und der Kühleinheit ist eine Schutzwand vorgesehen, die die Kühleinheit von dem Probenraum räumlich trennt. Die Kühleinheit ist zumindest teilweise in flächigem Kontakt mit der dem Probenraum abgewandten Außenfläche der Schutzwand. Im Innenbereich des Probenraums ist ein Luftleitblech vorgesehen, das so angeordnet ist, dass es mit der Schutzwand einen im oberen und im unteren Bereich des Probenraums offenen Kamin bildet. Weiterhin ist ein Lüfter vorgesehen, der einen in dem Probenraum umlaufenden Luftstrom erzeugt, der zwischen der mit der Kühleinheit in Kontakt stehenden Schutzwand und dem Leitblech hindurchströmt und abgekühlt wird. Der Luftstrom wird durch den Kamin bevorzugt von oben nach unten gelenkt. Aufgrund der relativ tiefen Verdampfungstemperatur, die am Verdampfer beispielsweise -35° C beträgt, und aufgrund des hohen Luftdurchsatzes durch den von Luftleitblech und Schutzwand gebildeten Kamin, werden die Aufnahmebehälter mit den definierten Probenmengen beschleunigt auf die gewünschte Kühltemperatur abgekühlt. Optimiert wird der hohe Luftdurchsatz durch einen entsprechend leistungsstarken Lüfter.

In diesem Zusammenhang wird es als besonders günstig angesehen, wenn zumindest ein Teil der Dosiereinheit zur Dosierung der definierten Probenmengen in die Aufnahmebehälter im gekühlten Probenraum angeordnet ist. Bevorzugt arbeitet die Dosiereinheit nach dem Vakuumprinzip; alternativ lassen sich die definierten Probenmengen auch über eine Peristaltikpumpe, die in dem Probenraum platziert ist, in die Aufnahmebehälter abfüllen. Da der komplette Probenraum infolge des durch den Lüfter erzeugten Luftstromes gekühlt wird, sind die Probenmengen bereits vorgekühlt, bevor sie in die Aufnahmebehälter eingefüllt werden. Dies wirkt sich wegen des hohen gekühlten Luftdurchsatzes auf die gewünschte schnelle Abkühlgeschwindigkeit der Proben positiv aus. Bevorzugt sind die Aufnahmebehälter für die definierten Probenmengen in einer Haltvorrichtung platziert, wobei die Haltevorrichtung im unteren Bereich des Probenraums angeordnet ist.

Gemäß einer bevorzugten Weiterbildung der erfindungsgemäßen Vorrichtung arbeitet die Kühleinheit nach dem Kompressionsverfahren und weist einen Verdampfer und einen Verdichter auf. Selbstverständlich ist es auch möglich, als Kühleinheit ein Peletier-Element so zu platzieren, dass es durch die Schutzwand vom Probenraum abgetrennt ist. Arbeitet die Kühleinheit nach dem Kompressionsverfahren, so ist der Verdampfer an der dem Probenraum abgewandten Außenfläche der Schutzwand befestigt ist. Insbesondere ist der Verdampfer eingeschäumt und somit wirkungsvoll gegen Korrosion geschützt. Die Schutzwand besteht übrigens bevorzugt aus Kunststoff.

Eine Ausgestaltung der erfindungsgemäßen Vorrichtung schlägt vor, dass der Verdichter und der Kompressor in einem von dem Probenraum abgetrennten Raumbereich in dem Gehäuse des Probennehmers angeordnet sind. Bevorzugt befindet sich dieser Raumbereich oberhalb des Probenraums.

Eine vorteilhafte Weiterbildung der erfindungsgemäßen Vorrichtung schlägt vor, dass der den Luftstrom in dem Probenraum erzeugende Lüfter im oberen Endbereich des von dem Luftleitblech und der Schutzwand gebildeten Kamins angeordnet ist. Insbesondere ist der Lüfter so platziert, dass der in dem Probenraum erzeugte Luftstrom an der Dosiereinheit vorbeiströmt. Insbesondere handelt es sich bei der Dosiereinheit um eine Dosiereinheit, die nach dem Peristaltik-Prinzip oder nach dem Vakuumprinzip arbeitet.

Die Erfindung wird anhand der nachfolgenden Zeichnungen näher erläutert. Es zeigt:

Fig. 1: einen Längsschnitt durch eine bevorzugte Ausführungsform des erfindungsgemäßen gekühlten Probennehmers,

Fig. 2: eine Draufsicht gemäß der Kennzeichnung II in Fig. 1,

Fig. 2a: einen Schnitt gemäß der Kennzeichnung A-A in Fig. 2 und

Fig. 2b: einen Schnitt gemäß der Kennzeichnung B-B in Fig. 2a.

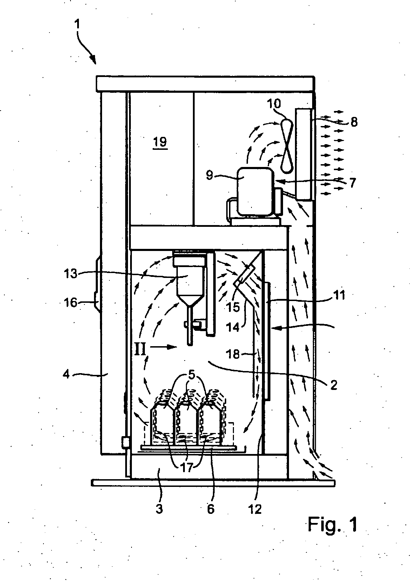

Fig. 1 zeigt einen Längsschnitt durch eine bevorzugte Ausführungsform des erfindungsgemäßen gekühlten Probennehmers 1. Der Probennehmer 1 besteht aus einem isolierten Gehäuse 3, das an der Vorderseite durch eine Tür 4 verschließbar ist. In dem Innern des Gehäuses 3 ist im unteren Bereich der Probenraum 2 bzw. der sog. Nassraum zu finden, im oberen Bereich findet sich ein weiterer Raumbereich 19, in dem neben nicht dargestellten Elektronikteilen auch Teile der Kühleinheit 7, im gezeigten Fall der Kompressor 9, der Verdichter 8 und der Lüfter 10 angeordnet sind. Zu der Kühleinheit 7, die im gezeigten Fall nach dem Kompressionsverfahren arbeitet, ist weiterhin der Verdampfer 11 zu rechnen. Der Verdampfer 11 ist an der Rückseite des Probenraums 2 hinter der Schutzwand 12 angeordnet. Die Schutzwand 12 ist bevorzugt aus Kunststoff gefertigt. Darüber hinaus ist der Verdampfer 11 eingeschäumt, so dass er von dem Probenraum 2 abgetrennt und sehr effektiv gegen Korrosion geschützt ist. Der Verdampfer 11 ist so ausgelegt, dass er eine relativ tiefe Verdampfungstemperatur erzeugt. Diese liegt bevorzugt bei ca. -35°C.

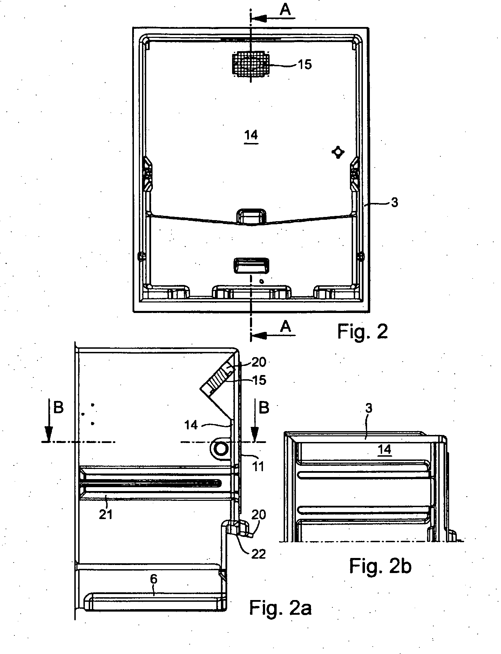

Vor der Schutzwand 12 ist ein Luftleitblech 14 derart angebracht, dass es zusammen mit der Schutzwand 12 einen Kamin 18 bildet. Die Maße und die Anordnung des Luftleitblechs 14 sind aus den Schnittzeichnungen der Figuren Fig. 2a und Fig. 2b ersichtlich. Durch diesen Kamin 18 drückt der Lüfter 15 die Luft von oben nach unten. Der Verlauf des Luftstromes in dem Probenraum 2 und in dem Raumbereich 19 ist durch Pfeile angedeutet. Der Lüfter 15 ist leistungsstark ausgelegt, so dass er einen hohen Luftdurchsatz erzeugt. Infolge der Kombination von tiefer Temperatur am Verdampfer 11 und hohem Luftdurchsatz im Kamin 18 erfolgt eine effektive und schnelle Abkühlung der Aufnahmebehälter 5 mit den eingefüllten definierten Probenmengen 17 auf die gewünschte Kühltemperatur. Da der Probenraum 2 komplett gekühlt wird, erfährt auch die Dosiereinheit 13 mit einer eventuell darin dosierten Probe eine Abkühlung. Im Prinzip genügt es, wenn das Dosierglas der Dosiereinheit 13 in dem Probenraum 2 angeordnet. Hierdurch wird sichergestellt, dass bereits eine vorgekühlte Probenmenge 17 von der Dosiereinheit 13 in einen der Aufnahmebehälter 5 abgefüllt wird. Infolge dieser Maßnahme wird die Zeit bis zum Erreichen der gewünschten Kühltemperatur der Proben noch einmal verkürzt.

Fig. 2 zeigt eine Draufsicht auf die Rückwand des Probenraums 2 gemäß der Kennzeichnung II in Fig. 1. Aus der Fig. 2 sind die Maße und die Anordnung des Luftleitblechs 14 ersichtlich. In Fig. 2a ist ein Schnitt gemäß der Kennzeichnung A-A in Fig. 2 zu sehen. Neben der Position des Luftleitblechs 14 sind hier in der Seitenwand des Gehäuses 3 die Führungsschienen 21 für die Aufnahme einer Verteilerwanne zu sehen. Im rechten Bereich der Seitenwand ist eine Abtropfrinne mit einem Anschlussstutzen 20 für einen Schlauch zu sehen. Fig. 2b zeigt einen Schnitt gemäß der Kennzeichnung B-B in Fig. 2a. Insbesondere ist aus dieser Zeichnung der Abstand zwischen dem Luftleitblech 14 und der Schutzwand 12 ersichtlich. Er liegt in der Größenordnung von wenigen Millimetern.

**Bezugszeichenliste**

1 Probennehmer

2 Probenraum

3 Gehäuse

4 Tür

5 Aufnahmebehälter

6 Haltevorrichtung

7 Kühleinheit

8 Verdichter

9 Kompressor

10 Lüfter

11 Verdampfer

12 Schutzwand

13 Dosiereinheit

14 Luftleitblech

15 Lüfter

16 Griff

17 Medium

18 Kamin

19 Raumbereich

20 Ablaufstutzen

21 Führungsschiene

22 Abtropfrinne

## Patentansprüche

1. Gekühlter Probennehmer (1) zur Entnahme und Aufbewahrung von definierten Probenmengen eines fluiden Mediums (17), mit einem Probenraum (2), in dem zumindest ein Aufnahmebehälter (5) zur Aufnahme der definierten Probenmengen angeordnet ist, und mit einer Kühleinheit (7), wobei zwischen dem Probenraum (2) und der Kühleinheit (7) eine Schutzwand (12) vorgesehen ist, die die Kühleinheit (7) von dem Probenraum (2) räumlich trennt, wobei die Kühleinheit (7) zumindest teilweise in flächigem Kontakt mit der dem Probenraum (2) abgewandten Außenfläche der Schutzwand (12) ist, **dadurch gekennzeichnet, dass** im Innenbereich des Probenraums (2) ein Luftleitblech (14) vorgesehen ist, wobei das Luftleitblech (14) so angeordnet ist, dass es mit der Schutzwand (12) einen im oberen und im unteren Bereich des Probenraums (2) offenen Kamin (18) bildet, wobei ein Lüfter (15) vorgesehen ist, der einen in dem Probenraum (2) umlaufenden Luftstrom erzeugt, der zwischen der mit der Kühleinheit (7) in Kontakt stehenden Schutzwand (12) und dem Leitblech (14) hindurchströmt und gekühlt wird.

2. Vorrichtung nach Anspruch 1, wobei die Kühleinheit (7) nach dem Kompressionsverfahren arbeitet und einen Verdampfer (11) und einen Verdichter (8) aufweist.

3. Vorrichtung nach Anspruch 1, wobei der Verdampfer (11) in unmittelbarer Nähe zu der dem Probenraum (2) abgewandten Außenfläche der Schutzwand (12) positioniert ist.

4. Vorrichtung nach Anspruch 1, wobei der Verdichter (8) in einem von dem Probenraum (2) abgetrennten Raumbereich (19) angeordnet ist.

5. Vorrichtung nach Anspruch 1, wobei der Raumbereich (19), der den Verdichter (8) enthält, oberhalb des Probenraumes (2) angeordnet ist.

6. Vorrichtung nach Anspruch 1, wobei eine Dosiereinheit (13) zur Dosierung der definierten Probenmengen vorgesehen ist, und wobei die Dosiereinheit (13) im Probenraum (2) angeordnet ist.

7. Vorrichtung nach Anspruch 1 oder 4, wobei eine Haltevorrichtung (6) für die Aufnahmebehälter (5) vorgesehen ist, und wobei die Haltevorrichtung (6) im unteren Bereich des Probenraums (2) angeordnet ist.

8. Vorrichtung nach Anspruch 1, wobei der den Luftstrom in dem Probenraum (2) erzeugende Lüfter (10) im oberen Endbereich des von dem Luftleitblech (14) und der Schutzwand (12) gebildeten Kamins (18) angeordnet ist.

9. Vorrichtung nach Anspruch 8, dass der Lüfter (10) so angeordnet ist, dass der in dem Probenraum (2) erzeugte Luftstrom an der Dosiereinheit (13) vorbeiströmt.

10. Vorrichtung nach Anspruch 1 oder 9, dass es sich bei der Dosiereinheit (13) um eine Dosiereinheit (13) handelt, die nach dem Peristaltik-Prinzip oder nach dem Vakuumprinzip arbeitet.

## Claims

1. Cooled sampler (1) for taking and storing defined sample volumes of a fluid (17) with a sample chamber (2), in which at least one receptacle (5) is arranged for receiving the defined sample volumes, and a cooling unit (7), whereby a protective partition (12) is provided between the sample chamber (2) and the cooling unit (7), said partition separating the cooling unit (7) from the sample chamber (2), whereby the cooling unit (7) at least intermittently has surface contact with the outer surface of the protective partition (12) facing away from the sample chamber (2), **characterized in that** an air baffle (14) is provided inside the sample chamber (2), whereby the air baffle (14) is arranged in such a way that it forms a flue, which is open in the upper and lower section of the sample chamber (2), with the protective partition (12), **characterized in that** a ventilator (15) is provided that generates an air current circulating in the sample chamber (2) that flows between the protective partition (12) in contact with the cooling unit (7) and the baffle (14), and is cooled.

2. Unit as per Claim 1, where the cooling unit (7) works using the compression process and exhibits an evaporator (11) and a compressor (8).

3. Unit as per Claim 1, where the evaporator (11) is directly beside the outer surface of the protective partition (12) facing away from the sample chamber (2).

4. Unit as per Claim 1, where the compressor (8) is arranged in an area (19) separated from the sample chamber (2).

5. Unit as per Claim 1, where the area (19) that contains the compressor (8) is arranged above the sample chamber (2).

6. Unit as per Claim 1, where a dosing unit (13) is provided for dosing the defined sample volumes and where the dosing unit (13) is arranged in the sample chamber (2).

7. Unit as per Claim 1 or 4, where a retaining unit (6) is provided for the receptacle (5) and where the retaining unit (6) is arranged in the lower area of the sample chamber (2).

8. Unit as per Claim 1 where the ventilator (10) that generates the air current in the sample chamber (2) is arranged in the upper end section of the flue (18) formed by the air baffle (14) and the protective partition (12).

9. Unit as per Claim 8, **characterized in that** the ventilator (10) is arranged in such a way that the air current generated in the sample chamber (2) travels past the dosing unit (13).

10. Unit as per Claim 1 or 9, **characterized in that** the dosing unit (13) functions in accordance with the peristaltic principle or the vacuum principle.

## Revendications

1. Dispositif de prélèvement d'échantillons (1) refroidi, destiné au prélèvement et à la conservation d'échantillons définis d'un produit fluide (17), avec une chambre à échantillon (2), dans laquelle est disposé au moins un récipient de réception (5) destiné à la réception des échantillons définis, et avec une unité de refroidissement (7), une paroi de protection (12) étant prévue entre la chambre à échantillon (2) et l'unité de refroidissement (7), paroi qui sépare dans l'espace l'unité de refroidissement (7) de la chambre à échantillon (2), l'unité de refroidissement (7) étant au moins partiellement en contact avec la surface extérieure de la paroi de protection (12) située à l'opposé de la chambre à échantillon (2),
**caractérisé en ce qu'**est prévu un déflecteur (14) à l'intérieur de la chambre à échantillon (2),
le déflecteur (14) étant disposé de telle manière qu'il se forme, avec la paroi de protection (12), une cheminée (18) ouverte dans la partie supérieure et dans la partie inférieure de la chambre à échantillon (2), un ventilateur (15) étant prévu pour générer dans la chambre à échantillon (2) un flux d'air, qui circule et est refroidi entre la paroi de protection (12), qui est en contact avec l'unité de refroidissement (7), et le déflecteur (14).

2. Dispositif selon la revendication 1, pour lequel l'unité de refroidissement (7) fonctionne d'après le principe de compression et comporte un évaporateur (11) et un compresseur (8).

3. Dispositif selon la revendication 1, pour lequel l'évaporateur (11) est positionné à proximité immédiate de la surface extérieure de la paroi de protection (12), située à l'opposé de la chambre à échantillon (2).

4. Dispositif selon la revendication 1, pour lequel le compresseur (8) est disposé dans une zone (19) séparée de la chambre à échantillon (2).

5. Dispositif selon la revendication 1, pour lequel la zone (19), qui contient le compresseur (8), est disposée au-dessus de la chambre à échantillon (2).

6. Dispositif selon la revendication 1, pour lequel une unité de dosage (13) est prévue en vue du dosage des échantillons définis, et pour lequel l'unité de dosage (13) est disposée dans la chambre à échantillon (2).

7. Dispositif selon la revendication 1 ou 4, pour lequel est prévu un dispositif de maintien (6) pour le réservoir (5), et pour lequel le dispositif de maintien (6) est disposé dans la zone inférieure de la chambre à échantillon (2).

8. Dispositif selon la revendication 1, pour lequel le ventilateur (10) générant le flux d'air dans la chambre à échantillon (2) est disposé à l'extrémité supérieure de la cheminée (18) formée par le déflecteur (14) et la paroi de protection (12).

9. Dispositif selon la revendication 8, pour lequel le ventilateur (10) est disposé de telle manière que le flux d'air généré dans la chambre à échantillon (2) circule à travers l'unité de dosage (13).

10. Dispositif selon la revendication 1 ou 9, pour lequel il s'agit, concernant l'unité de dosage (13), d'une unité fonctionnant d'après le principe péristaltique ou à dépression.
